# EUROPÄISCHE PATENTSCHRIFT

(11) **EP 1 615 821 B1**
(45) Veröffentlichungstag und Bekanntmachung des Hinweises auf die Patenterteilung: **23.12.2009**
(21) Anmeldenummer: 04728760.2
(22) Anmeldetag: 22.04.2004
(51) Int. Cl.: B64G 1/36

(54) **VERFAHREN UND EMPFÄNGER ZUR GLEICHZEITIGEN ERFASSUNG UND AUSWERTUNG VON MINDESTENS ZWEI ELEKTROMAGNETISCHEN SIGNALEN**
METHOD AND RECEIVER FOR THE SIMULTANEOUS DETECTION AND EVALUATION OF AT LEAST TWO ELECTROMAGNETIC SIGNALS
PROC D ET R CEPTEUR POUR SAISIR ET ANALYSER SIMULTAN MENT AU MOINS DEUX SIGNAUX LECTROMAGN TIQUES

(30) Priorität: 24.04.2003 DE 10318580
(43) Veröffentlichungstag der Anmeldung: 18.01.2006
(73) Patentinhaber: Astrium GmbH, 81663 München (DE)
(72) Erfinder: KÜHL, Christopher, 82024 Taufkirchen (DE); MELF, Markus, 83677 Reichersbeuern (DE)
(74) Vertreter: Hummel, Adam
(86) Internationale Anmeldenummer: PCT/DE2004/000853
(87) Internationale Veröffentlichungsnummer: WO 2004/094232

(56) Entgegenhaltungen:
- DE-A- 19 846 690
- US-A- 3 781 552
- US-A1- 2002 121 574

## Beschreibung

Die vorliegende Erfindung betrifft ein Verfahren und einen Empfänger zur gleichzeitigen Erfassung und Auswertung von mindestens zwei elektromagnetischen Signalen. Ein solches Verfahren oder ein solcher Empfänger kann insbesondere in einem Raumfahrzeug Anwendung finden. Raumfahrzeuge im Sinne der Erfindung sind alle künstlichen Körper, die für einen Einsatz im Weltall ausgelegt sind, insbesondere also Satelliten, Raumsonden, Raumfähren, Raumstationen oder Raketen. Das Verfahren und der Empfänger kann aber grundsätzlich auch für terrestrischen Anwendungen verwendet werden. Empfänger im Sinne der Erfindung sind alle Einrichtungen, die dazu ausgelegt sind, elektromagnetische Strahlung zu Empfangen und zu verarbeiten, beispielsweise zu Zwecken des Datenaustausches zwischen Raumfahrzeugen oder zwischen Raumfahrzeug und Erdstationen oder zwischen sonstigen Objekten, oder auch zu Zwecken der Erfassung, Ortung, Vermessung und/oder Beobachtung von Objekten, die elektromagnetische Strahlung emittieren. Signale im Sinne der Erfindung sind jede Art von elektromagnetischer Strahlung, die von einem erfindungsgemäßen Empfänger erfasst werden kann, also sowohl Strahlung, die aktiv von einem Objekt ausgesendet wird, als auch passiv von einem Objekt gestreut oder reflektiert wird.

Aus dem Stand der Technik ist aus DE 198 46 690 A1 eine optische Empfänger einrichtung bekannt, die in Form eines kombinierten Erd-Sternsensors ausgebildet ist. Dieser dient zur Erd- und Sternbeobachtung, wobei aus den gewonnenen Informationen eine dreiachsige Lage- und Positionsbestimmung von Satelliten ermöglicht wird.

Aus DE 198 47 480 A1 ist eine optische Empfängereinrichtung für optische Inter-Satelliten-Verbindungen bekannt. Der entsprechende optische Empfänger ist in der DE 198 47 480 A1 ausreichend detailliert beschrieben. Solche Inter-Satelliten-Ver bindungen dienen zum Austausch von Daten zwischen einzelnen Satelliten, können aber auch, wie im Fall der DE 198 47 480 A1, zur Lagebestimmung eines Satelliten genutzt werden.

Ein weiterer Empfänger zur Erfassung mehrerer Lichtsignale ist aus der US-A-2002/0121574 bekannt.

Ein Problem bei Anordnungen aus dem Stand der Technik entsteht jedoch, wenn gleichzeitig zwei oder mehr elektromagnetische Signale erfasst werden müssen, die sich auf einem gemeinsamen Detektor überlagern. Es muss hierbei trotzdem eine ausreichende Trennung der einzelnen elektromagnetischen Signale erfolgen können, die eine eindeutige Identifikation der einzelnen elektromagnetischen Signale erlaubt. Ein weiteres Problem ist, dass oft im Bereich außerhalb der optischen Achse des Empfängers eine Verzeichnung von erfassten Strahlungsbildern auftritt. Dies wird insbesondere dann relevant; wenn eines der elektromagnetischen Signale mit besonders hoher Genauigkeit ermittelt werden muss. Die Anordnungen aus dem Stand der Technik bieten hierfür keine ausreichende Lösung.

Aufgabe der vorliegenden Erfindung ist es daher, ein Verfahren und Empfänger zur gleichzeitigen Erfassung und Auswertung von mindestens zwei elektromagnetischen Signalen bereitzustellen, das die Nachteile des Standes der Technik behebt.

Diese Aufgabe wird gelöst durch die Merkmale der Ansprüche 1 und 8.

Ein erster Gegenstand der vorliegenden Erfindung betrifft ein Verfahren zur gleichzeitigen Erfassung und Auswertung von mindestens zwei elektromagnetischen Signalen durch einen gemeinsamen Detektor, wobei die Erfassung und Auswertung zumindest eines Strahlungsbild-Signals erfolgt.

Gemäß der vorliegenden Erfindung umfasst das Verfahren folgende Schritte:
- Aufteilung eines Eingangs-Strahlungsbildes in mindestens zwei Teilbilder
- Projektion der Teilbilder auf einen Strahlungsdetektor, wobei
- eine Abbildung der Teilbilder auf den Strahlungsdetektor derart erfolgt, dass Strahlungsintensitäten der Teilbilder aus der Bildmitte des Eingangs-Strahlungsbildes an den Rand des Strahlungsbildes auf dem Detektor projiziert werden.

Als Strahlungsbild-Signal wird dabei ein flächig ausgedehntes elektromagnetisches Strahlungssignal angesehen, welches bei seiner Projektion auf den Detektor als Bild und nicht lediglich als weitgehend punktförmig erscheint.

Der Vorteil des erfindungsgemäßen Verfahrens besteht darin, dass das Strahlungbild, welches als ausgedehntes Strahlungssignal weniger anfällig für Verzeichnungen ist, in Randbereiche verlagert wird, wodurch der Bereich um die optische Achse für die - gleichzeitige - Erfassung weniger ausgedehnter Signale genutzt werden kann, welche nun aber mit höherer Genauigkeit erfolgen kann. Dies gilt insbesondere, wenn neben einem Strahlungsbild die genaue Position eines weiteren Signals mit geringerer Ausdehnung erfasst werden muss. Außerdem kann eine gegenseitige störende Beeinflussung der gleichzeitig zu erfassenden Signale durch die Verlagerung der Strahlungsintensitäten der Teilbilder in den Randbereich vermieden oder zumindest reduziert werden. Dies gilt insbesondere, wenn die Strahlungsintensitäten des Strahlungsbildes in etwa gleich hoch oder sogar höher sind als die Strahlungsintensität des mindestens einen weiteren Signals. Auch kann die Detektorfläche durch Verlagerung der Strahlungsintensitäten aus der Bildmitte des Strahlungsbildes in den Randbereich effektiver genutzt werden.

Die Projektion der Strahlungsintensitäten der Teilbilder aus der Bildmitte des Eingangs-Strahlungsbildes an den Rand des Strahlungsbildes kann insbesondere dadurch erfolgen, dass die Teilbilder des Eingangs-Strahlungsbildes gespiegelt werden. Alternativ kann aber auch vorgesehen werden, dass die Teilbilder des Eingangs-Strahlungsbildes in Richtung auf den Bildrand hin verschoben werden.

Die Aufteilung des Eingangs-Strahlungsbildes kann in jede geeignete Zahl und Form von Teilbildern erfolgen, die es gestatten, die Strahlungsintensitäten aus der Bildmitte des Eingangs-Strahlungsbildes an den Rand des Strahlungsbildes zu verlagern. So kann für den Fall eines viereckigen Eingangs-Strahlungsbildes insbesondere vorgesehen sein, dass eine Aufteilung des Eingangs-Strahlungsbildes in vier Teilbilder erfolgt und eine Abbildung der Teilbilder derart erfolgt, dass Strahlungsintensitäten aus der Bildmitte des Eingangs-Strahlungsbildes in Richtung auf eine Ecke des Strahlungsbildes auf dem Detektor projiziert werden. Grundsätzlich kann aber auch beispielsweise eine Aufteilung in nur zwei Teilbilder oder in eine größere Zahl von Teilbildern erfolgen.

Das erfindungsgemäße Verfahren kann grundsätzlich für alle geeigneten Arten von elektromagnetischen Signalen Anwendung finden, von denen eines als Strahlungsbild-Signal vorliegt. So kann beispielsweise ein Datenkommunikationssignal als eines der elektromagnetischen Signale erfasst werden, beispielsweise zusätzlich zu einem Strahlungsbild-Signal. Eine Anwendung hierzu kann beispielsweise im Rahmen von Datenverbindungen zwischen Objekten wie insbesondere Raumfahrzeugen oder ähnlichem erfolgen. Hierzu wird auch auf die Ausführungen in der Beschrelbungseinleitung verwiesen.

In einer speziellen Anwendung des vorliegenden Verfahrens kann vorgesehen werden, dass als Strahlungsbild-Signale Strahlungsbilder von Referenzobjekten, insbesondere Himmelskörpern erfasst werden. Dies kann insbesondere dann vorgesehen werden, wenn eine Identifikation oder Positionsbestimmung bestimmter Referenzobjekte wie insbesondere Himmelskörper erfolgen soll. Mit Hilfe der gewonnenen Information kann dann beispielsweise eine Positionsinformation und/oder Lageinformation relativ zu dem entsprechenden Referenzobjekt gewonnen werden. Neben dieser Erfassung eines oder mehrerer Referenzobjekte können aber noch weitere elektromagnetische Signale wie die von weitgehend punktförmigen Signalquellen erfasst werden, welche z. B. zur Gewinnung weiterer Positionsinformation und/oder Lageinformation oder auch z. B. zur Datenkommunikation dienen können.

Eine besondere Ausführungsform des vorgenannten Verfahrens, welche insbesondere für Raumfahrzeuge Anwendung findet, sieht vor, dass gleichzeitig Strahlungsbilder von Erde und Sternen erfasst werden und das Strahlungsbild der Erde in Teilbilder aufgeteilt wird. Damit kann erreicht werden, dass die in der Regel weitgehend punktförmigen und meist intensitätsschwächeren elektromagnetischen Signale in der optischen Achse des Detektors - also weitgehend ohne Verzeichnung - erfasst werden können, was eine genaue Positionsbestimmung der Sterne erlaubt. Dagegen wird das ausgedehntere und in der Regel intensitätsstärkere Strahlungsbild der Erde an den Rand des Detektors verlagert, also in einen Bereich außerhalb der optischen Achse des Detektors. Damit wird eine Erfassung von Erde und Sterne mit größerer Genauigkeit als beim Stand der Technik ermöglicht bei gleichzeitig verringerter gegenseitiger Beeinflussung der jeweiligen Signale.

Ein weiterer Gegenstand der vorliegenden Erfindung ist ein Empfänger mit einer Einrichtung zur gleichzeitigen Erfassung und Auswertung von mindestens zwei elektromagnetischen Signalen durch einen gemeinsamen Detektor, wobei die Einrichtung zur Erfassung und Auswertung zumindest eines Strahlungsbild-Signals ausgelegt ist. Gemäß der Erfindung ist nun vorgesehen, dass mindestens ein Strahlungsbildteilär zur Aufteilung eines Eingangs-Strahlungsbildes in mindestens zwei Teilbilder sowie zur Projektion der Teilbilder auf einen Strahlungsdetektor vorgesehen ist, der so ausgelegt ist, dass eine Abbildung der Teilbilder auf den Strahlungsdetektor derart erfolgt, dass Strahlungsintensitäten der Tellbilder aus der Bildmitte des Eingangs-Strahlungsbildes an den Rand des Strahlungsbildes auf dem Detektor projiziert werden. Auch für den erfindungsgemäßen Empfänger ergeben sich in analoger Weise die Vorteile, die bereits für das erfindungsgemäße Verfahren dargestellt wurden.

Insbesondere kann dabei der Strahlungsbildteiler derart ausgelegt sein, dass die Teilbilder des Eingangs-Strahlungsbildes gespiegelt werden. Es kann aber auch der Strahlungsbildteiler derart ausgelegt sein, dass die Teilbilder des Eingangs-Strahlungsbildes in Richtung auf den Bildrand hin verschoben werden.

Für den Fall eines viereckigen Eingangs-Strahlungsbildes kann der Strahlungsbildteiler insbesondere derart ausgelegt sein, dass eine Aufteilung des Eingangs-Strahlungsbildes in vier Teilbilder erfolgt und eine Abbildung der Teilbilder derart erfolg, dass Strahlungsintensitäten aus der Bildmitte des Eingangs-Strahlungsbildes in Richtung auf eine Ecke des Strahlungsbildes auf dem Detektor projiziert werden.

Der Empfänger kann insbesondere als Teil einer Datenkommunikationseinrichtung ausgebildet sein. Hierzu wird auf die Ausführungen zum erfindungsgemäßen Verfahren verwiesen.

Der Empfänger kann auch als Sensor zur Erfassung von Strahlungsbildern von Referenzobjekten, insbesondere von Himmelskörpern, ausgelegt sein. Auch hierzu wird auf die Ausführungen zum erfindungsgemäßen Verfahren verwiesen, wobei auch beim erfindungsgemäßen Empfänger eine Kombination mit einer weiteren Erfassungsmethode von Signalen, beispielsweise zur Datenkommunikation, vorgesehen sein kann. Der Empfänger kann beispielsweise als kombinierter Erd-Stern-Sensor ausgelegt sein.

Grundsätzlich kann der Empfänger für jede geeignete Wellenlänge oder jeden geeigneten Wellenlängenbereich ausgelegt sein. Insbesondere kann vorgesehen werden, dass der Empfänger als optischer Empfänger ausgelegt ist.

Ein spezielles Ausführurigsbeispiel der vorliegenden Erfindung wird nachfolgend anhand der Fig. 1 bis 7 am Beispiel eines optischen Empfängers dargestellt.

Es zeigen:
- Fig. 1:: Schematische Darstellung eines erfindungsgemäßen optischen Empfängers
- Fig. 2:: Schematische Darstellung der Aufteilung eines Eingangs-Strahlungs- bildes in Teilbilder
- Fig. 3:: Schematische Darstellung der Projektion verschobener Teilbilder auf den Detektor
- Fig. 4:: Schematische Darstellung der Projektion gespiegelter Teilbilder auf den Detektor
- Fig. 5:: Darstellung analog Fig. 1 und 2 ohne Strahlungsbildteiler für einen kombinierten Erd-Stern-Sensor
- Fig. 6:: Darstellung analog Fig. 1 und Fig. 4 mit Prismenanordnung als Strah- lungsbildteiler für einen kombinierten Erd-Stern-Sensor
- Fig. 7:: Darstellung analog Fig. 1 und Fig. 4 mit Spiegelanordnung als Strah- lungsbildteiler für einen kombinierten Erd-Stern-Sensor

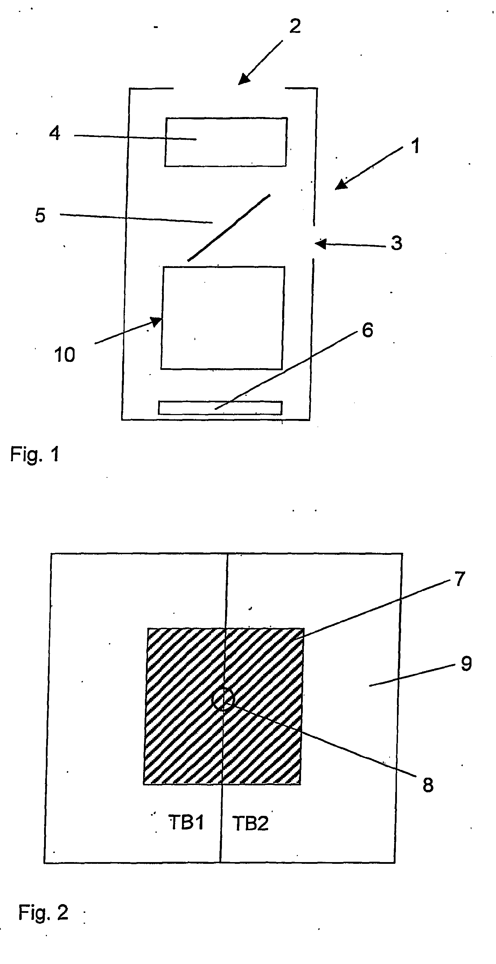

Fig. 1 zeigt rein schematisch ein spezielles Ausführungsbeispiel für einen optischen Empfänger 1 nach der vorliegenden Erfindung. Dieser weist eine erste, ausgedehnte Apertur 2 zur Erfassung eines ausgedehnten optischen Strahlungsbild-Signals und eine zweite Apertur 3 zur Erfassung weniger ausgedehnter optischer Signale auf. Im Beispiel nach Fig. 1 sind die beiden Aperturen 2, 3 senkrecht zueinander angeordnet, es ist aber auch eine andere geeignete Anordnung der Aperturen 2, 3 möglich.

Das durch die Apertur 2 eintretende Strahlüngsbild-Signal wird auf einen optischen Detektor 6 projiziert, das durch die Apertur 3 eintretende optische Signal wird beispielsweise über einen Spiegel 5 auf den Detektor 6 projiziert. Zur Durchführung oder Optimierung der Projektion kann zusätzlich auch eine entsprechend ausgebildete abbildende Optik 10 vorgesehen sein. Auf dem Detektor 6 überlagern sich dann das optische Strahlungsbild-Signal und das weitere optische Signal. Der Spiegel 5 kann auch als halbdurchlässiger Spiegel ausgebildet sein. Damit kann eine Überlagerung der beiden optischen Signale bereits durch den halbdurchlässigen Spiegel erfolgen.

Fig. 2 zeigt die Situation der Überlagerung der beiden optischen Signale, wie sie sich ohne eine weitere Beeinflussung des Strahlungsbild-Signals ergeben würde. Als Strahlungsbild-Signal ist hier ein viereckiges optisches Eingangs-Strahlungsbild 9 angenommen, wobei das Eingangs-Strahlungsbild 9 das optische Bild eines Referenzobjekts 7 enthält. Weiterhin ist ein weiteres, weitgehend punktförmiges Signal 8 angenommen, welches durch die Apertur 3 erfasst wurde. Es würde dann normalerweise das Eingangs-Strahlungsbildsignal 9 mit dem weiteren, weitgehend punktförmigen optischen Signal 8 überlagert. Wie Fig. 2 zeigt, wird das Signal 8 in der Bildmitte und damit in der optischen Achse des Detektors 6 abgebildet, um Verzeichnungen möglichst zu vermeiden. Dabei wird aber das optische Signal 8 gerade mit dem optischen Bild des Referenzobjekts 7 überlagert, was eine Separierung des optischen Signals 8 von dem des Referenzobjekts 7 erschwert.

Um dieses Problem zu vermeiden, wird das Eingangs-Strahlungsbild 9 in zwei Teilbilder TB1 und TB2 aufgeteilt, bevor eine Überlagerung mit dem weiteren optischen Signal erfolgt. Die beiden Teilbilder sind bereits in Fig. 2 dargestellt. Hierzu ist ein Strahlungsbildteiler 4 in dem optischen Empfänger vorgesehen, wie in Fig. 1 rein schematisch dargestellt. Es kann aber auch eine Aufteilung in mehr als nur zwei Teilbilder oder in Teilbilder mit einer anderen Form erfolgen.

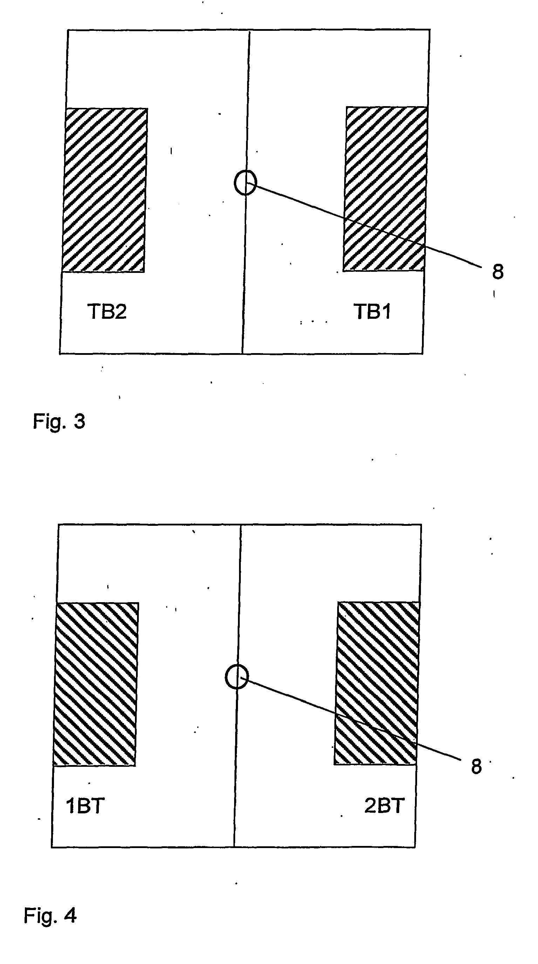

Der Strahlungsbildteiler kann nun so ausgelegt sein, dass entweder die Teilbilder TB1 und TB2 zum Bildrand hin derart verschoben werden, dass die Strahlungsintensitäten aus der Bildmitte des Eingangs-Strahlungsbildes 9, also die Bildteile des Referenzobjekt-Bildes 7, an den Bildrand verschoben werden. Dies ist in Fig. 3 dargestellt. In der Bildmitte verbleibt damit nur noch das optische Signal 8, das nun unbeeinflusst von dem Strahlungsbild des Referenzobjekts 7 erfasst werden kann. Auch wird nun die Fläche des Detektors 6 effektiver genutzt, da auch die Randbereiche für eine Signalerfassung genutzt werden.

Fig. 4 zeigt eine Alternative zu Fig. 3, bei der nicht ein Verschieben, sondern eine geeignete Spiegelung der Teilbilder TB1, TB2 erfolgt. Durch diese geeignete Spiegelung werden wiederum die Strahlungsintensitäten aus der Bildmitte des Eingangs-Strahlungsbildes 9, also die Bildteile des Referenzobjekt-Bildes 7, auf den Bereich des Bildrandes abgebildet. Dadurch kann wiederum, wie im Fall der Fig. 3, das optische Signal 8 nun unbeeinflusst von dem Strahlungsbild des Referenzobjekts 7 erfasst werden.

Das weitere optische Signal 8 kann beispielsweise ein optisches Datenkommunikationssignal darstellen, aber auch ein weitgehend punktförmiges Referenzsignal einer künstlichen oder natürlichen Strahlungsquelle, beispielsweise eines Sterns. Aus dem optischen Signal 8 kann also entweder Information im Rahmen einer Datenüber tragung gewonnen werden, oder es kann über eine Positionsbestimmung des Ursprungs des optischen Signals 8 eine entsprechende Positions- oder Lageinformation gewonnen werden.

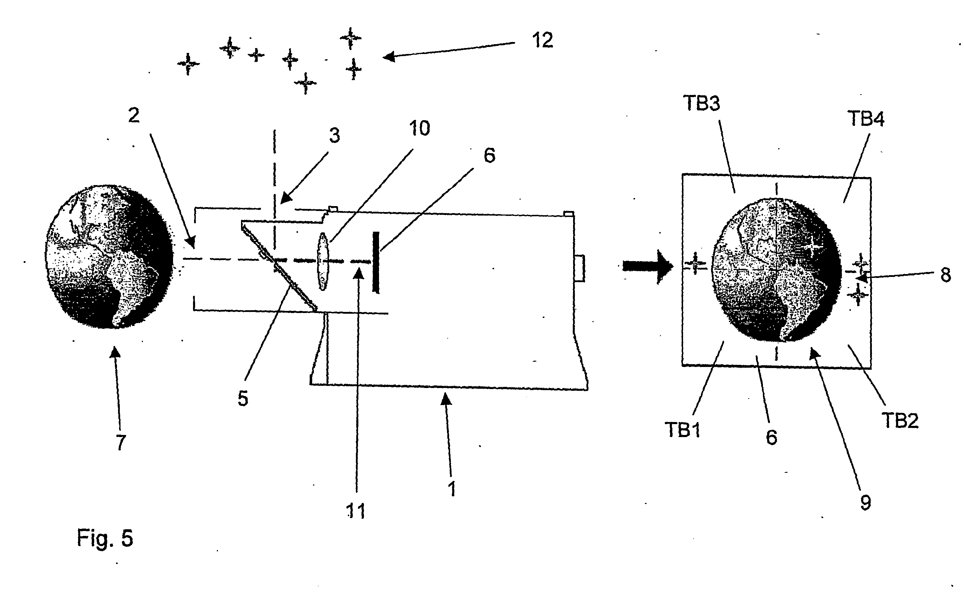

Fig. 5 zeigt nun eine spezielle Ausführungsform des optischen Empfängers 1 des vorgenannten Beispiels im Rahmen eines kombinierten Erd-Stern-Sensors. Dieser weist ebenfalls zwei Aperturen 2, 3 auf sowie eine Anordnung 5, beispielsweise ein halbdurchlässiger Spiegel, zur Überlagerung von zwei Strahlungsbild-Signalen 8, 9 hier das Eingangs-Strahlungsbild 9 der Erde 7 und das Strahlungsbild-Signal 8 ausgewählter Sterne 12. Die beiden überlagerten Strahlungsbild-Signale 8, 9 werden dann durch eine geeignete Optik 10 auf einen Detektor 6 abgebildet, Im Fall nach Fig. 5 würden sich also die beiden Strahlungsbild-Signale 8, 9 so überlagern, dass das optische Eingangs-Strahlungsbild 9 des Referenzobjekts Erde 7 mit dem optischen Signal 8 der Sterne 12 direkt in der optischen Achse 11 des Detektors 6 überlagert würde, wie in Fig. 5 rechts dargestellt. Damit wären das Signal 8 der Sterne 12 von dem Strahlungsbild-Signal 9 der Erde 7 kaum separierbar aufgrund der höheren Strahlungsintensität des Strahlungsbild-Signals der Erde 7.

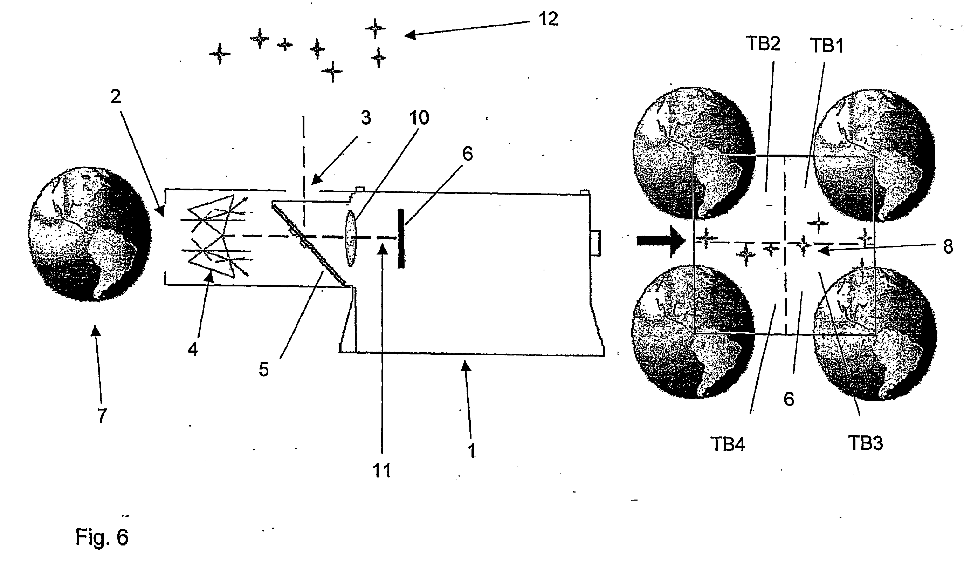

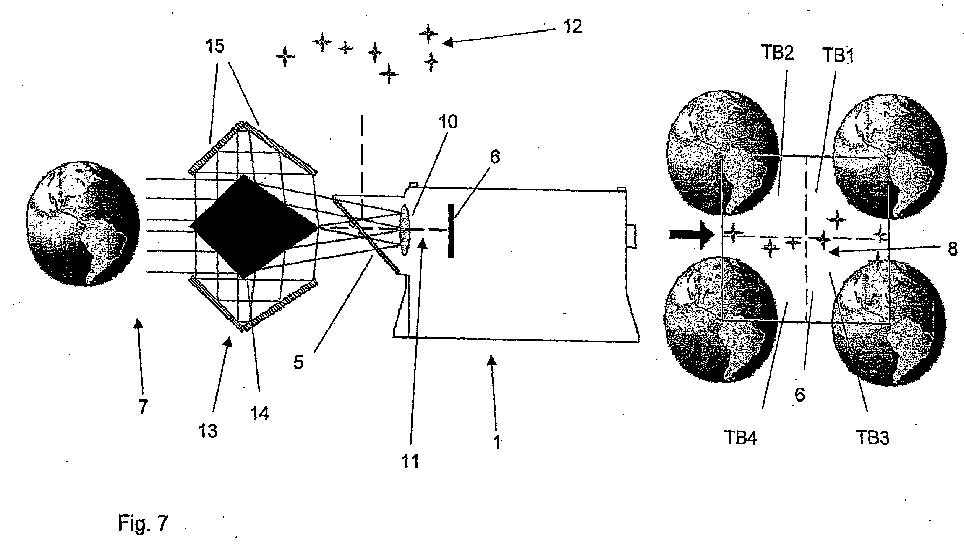

Um dies zu vermeiden, werden vier Teilbilder TB1 bis TB4 des Strahlungsbild-Signales 9 der Erde 7 erzeugt, die durch optische Abbildung, beispielsweise mit Hilfe von Prismenanordnungen oder Spiegelanordnungen, an den Bildrand des Eingangs-Strahlungsbildes 9 verschoben werden. Dies ist in Fig. 6 und 7 dargestellt.

Fig. 6 zeigt ein Beispiel, bei dem eine Prismenanordnung verwendet wird. Bei der Auswahl der geeigneten Prismenanordnung ist jedoch darauf zu achten, dass eine achromatische Abbildung der Strahlungsbilder erfolgt, sofern die Strahlungsbilder nicht monochromatische Strahlungsbild-Signale sind. Dieses Problem kann grundsätzlich umgangen werden, wenn statt einer Prismenanordnung eine reflektive Anordnung mit Hilfe geeignet angeordneter und geeignet geformter Spiegel verwendet wird, wie beispielhaft in Fig. 7 dargestellt.

Im Beispiel nach Fig. 6 ist dem halbdurchlässigen Spiegel ein Strahlungsbildteiler 4 mit einer geeigneten Prismenanordnung vorgeschaltet, der eine Vervierfachung des Eingangs-Strahlungsbildes 9 unter gleichzeitiger Verschiebung der einzelnen Strahlungsbilder gegeneinander in Richtung der Ecken des ursprünglichen Eingangs-Strahlungsbildes 9 bewirkt. Auf dem Detektor 6, in Fig. 6 rechts dargestellt, werden dabei nur die verschobenen Teilbilder TB1 bis TB4 in den Ecken erfasst, in der optischen Achse 11 des Detektors dagegen wird nur das optische Signal 8 der Sterne 12 abgebildet. Die Sterne 12 weisen auf dem Detektor 6 eine viel geringere Ausdehnung auf, erscheinen also weitgehend punktförmig. Durch die Anordnung nach Fig. 6 wird gewährleistet, dass die Position der Sterne 12 weitgehend ohne Verzeichnungen und ohne störende Beeinträchtigungen durch das Strahlungsbild der Erde 7 erfasst werden können und damit genauere Positions- und Lageinformationen für den Erd-Stern-Sensor in bezug auf Erde 7 und Sterne 12 gewonnen werden können.

Die Anordnung nach Fig. 7 entspricht weitgehend der Anordnung nach Fig. 6. Zur Vereinfachung und besseren Übersichtlichkeit der Darstellung wurde in Fig. 7 auf die Darstellung der Aperturen 2, 3 verzichtet, die auch hier entsprechend Fig. 6 vorzusehen wären. Im Beispiel nach Fig. 7 wurde die Prismenanordnung 4 durch eine Spiegelanordnung 13 ersetzt, die aus einem zentralen, verspiegelten Körper 14 und mehreren planaren Spiegeln 15 besteht, die den Körper 14 teilweise umgeben, jedoch zumindest den Strahlengang für den Eintritt und Austritt des Strahlungsbildes aus der Spiegelanordnung 13 freilassen. Durch die Verwendung einer solchen Spiegelanordnung 13 kann eine Erfassung beliebiger Strahlungsbilder unabhängig von deren spektraler Zusammensetzung erfolgen.

## Patentansprüche

1. Verfahren zur gleichzeitigen Erfassung und Auswertung von mindestens zwei elektromagnetischen Signalen (8, 9) durch einen gemeinsamen Detektor (6), wobei die Erfassung und Auswertung zumindest eines Strahlungsbild-Signals (8, 9)erfolgt,
**gekennzeichnet durch** die Schritte:
- Aufteilung eines Eingangs-Strahlungsbildes (9) in mindestens zwei Teilbilder (TB1, TB2, TB3, TB4),
- Projektion der Teilbilder (TB1, TB2, TB3, TB4) auf einen Strahlungsdetektor (6), wobei
- eine Abbildung der Teilbilder (TB1, TB2, TB3, TB4) auf den Strahlungsdetektor (6) derart erfolgt, dass Strahlungsintensitäten der Teilbilder (TB1, TB2, TB3, TB4) aus der Bildmitte des Eingangs-Strahlungsbildes (9) an den Rand des Strahlungsbildes (9) auf dem Detektor (6) projiziert werden.

2. Verfahren nach Anspruch 1, **dadurch gekennzeichnet, dass** die Teilbilder (TB1, TB2, TB3, TB4) des Eingangs-Strahlungsbildes (9) gespiegelt werden.

3. Verfahren nach Anspruch 1, **dadurch gekennzeichnet, dass** die Teilbilder (TB1, TB2, TB3, TB4) des Eingangs-Strahlungsbildes (9) in Richtung auf den Bildränd hin verschoben werden.

4. Verfahren nach Anspruch 2 oder 3, **dadurch gekennzeichnet**, **dadurch gekennzeichnet, dass** für den Fall eines viereckigen Eingangs-Strahlungsbildes (9) eine Aufteilung des Eingangs-Strahlungsbildes (9) in vier Teilbilder (TB1, TB2, TB3, TB4) erfolgt und eine Abbildung der Teilbilder (TB1, TB2, TB3, TB4) derart erfolgt, dass Strahlungsintensitäten aus der Bildmitte des Eingangs-Strahlungsbildes (9) in Richtung auf eine Ecke des Strahlungsbildes (9) auf dem Detektor (6) projiziert werden.

5. Verfahren nach einem der Ansprüche 1 bis 4, **dadurch gekennzeichnet, dass** ein Datenkommunikationssignal als eines der elektromagnetischen Signale (8, 9) erfasst wird.

6. Verfahren nach einem der Ansprüche 1 bis 5, **dadurch gekennzeichnet, dass** Strahlungsbilder (8, 9) von Referenzobjekten (7, 12), insbesondere von Himmelskörpern, erfasst werden.

7. Verfahren nach Anspruch 6, **dadurch gekennzeichnet, dass** gleichzeitig Strahlungsbilder (8, 9) von Erde (7) und Sternen (12) erfasst werden und das Strahlungsbild (9) der Erde (7) in Teilbilder (TB1, TB2, TB3, TB4) aufgeteilt wird.

8. Empfänger (1) mit einer Einrichtung zur gleichzeitigen Erfassung und Auswertung von mindestens zwei elektromagnetischen Signalen durch einen gemeinsamen Detektor (6), wobei die Einrichtung zur Erfassung und Auswertung zumindest eines Strahlungsbild-Signals (8, 9) ausgelegt ist,
**dadurch gekennzeichnet,**
**dass** mindestens ein Strahlungsbildteiler (4) zur Aufteilung eines Eingangs-Strahlungsbildes (9) in mindestens zwei Teilbilder (TB1, TB2, TB3, TB4) sowie zur Projektion der Teilbilder auf einen Strahlungsdetektor (6) vorgesehen ist, der so ausgelegt ist, dass eine Abbildung der Teilbilder (TB1, TB2, TB3, TB4) auf den Strahlungsdetektor (6) derart erfolgt, dass Strahlungsintensitäten der Teilbilder (TB1, TB2, TB3, TB4) aus der Bildmitte des Eingangs-Strahlungsbildes (9) an den Rand des Strahlungsbildes (9) auf dem Detektor (6) projiziert werden.

9. Empfänger nach Anspruch 8, **dadurch gekennzeichnet, dass** der Strahlungsbildteiler (4) derart ausgelegt ist, dass die Teilbilder (TB1, TB2, TB3, TB4) des Eingangs-Strahlungsbildes (9) gespiegelt werden.

10. Empfänger nach Anspruch 8, **dadurch gekennzeichnet, dass** der Strahlungsbildteiler (4) derart ausgelegt ist, dass die Teilbilder (TB1, TB2, TB3, TB4) des Eingangs-Strahlungsbildes (9) in Richtung auf den Bildrand hin verschoben werden.

11. Empfänger nach Anspruch 9 oder 10, **dadurch gekennzeichnet, dass** der Strahlungsbildteiler (4) für den Fall eines viereckigen Eingangs-Strahlungsbildes (9) derart ausgelegt ist, dass eine Aufteilung des Eingangs-Strahlungsbildes (9) in vier Teilbilder (TB1, TB2, TB3, TB4) erfolgt und eine Abbildung der Teilbilder (TB1, TB2, TB3, TB4) derart erfolgt, dass Strahlungsintensitäten aus der Bildmitte des Eingangs-Strahlungsbildes (9) in Richtung auf eine Ecke des Strahlungsbildes (9) auf dem Detektor (6) projiziert werden.

12. Empfänger nach einem der Ansprüche 8 bis 11, **dadurch gekennzeichnet, dass** der Empfänger (1) als Teil einer Datenkommunikationseinrichtung ausgebildet ist.

13. Empfänger nach einem der Ansprüche 8 bis 12, **dadurch gekennzeichnet dass** der Empfänger (1) als Sensor zur Erfassung von Strahlungsbildern (8, 9) von Referenzobjekten (7, 12), insbesondere von Himmelskörpern, ausgelegt ist.

14. Empfänger nach einem der Ansprüche 8 bis 13, **dadurch gekennzeichnet, dass** der Empfänger (1) als optischer Empfänger ausgelegt ist.

15. Empfänger nach Anspruch 14, **dadurch gekennzeichnet, dass** der Empfänger (1) als kombinierter Erd-Stern-Sensor ausgelegt ist.

## Claims

1. Method for simultaneous detection and evaluation of at least two electromagnetic signals (8, 9) by a common detector (6), with at least one radiation image signal (8, 9) being detected and evaluated,
**characterized by** the following steps:
- splitting of an input radiation image (9) into at least two image elements (TB1, TB2, TB3, TB4),
- projection of the image elements (TB1, TB2, TB3, TB4) onto a radiation detector (6), with
- an image of the image elements (TB1, TB2, TB3, TB4) being produced on the radiation detector (6) such that radiation intensities of the image elements (TB1, TB2, TB3, TB4) from the image centre of the input radiation image (9) are projected onto the edge of the radiation image (9) on the detector (6).

2. Method according to Claim 1, **characterized in that** the image elements (TB1, TB2, TB3, TB4) of the input radiation image (9) are reflected.

3. Method according to Claim 1, **characterized in that** the image elements (TB1, TB2, TB3, TB4) of the input radiation image (9) are shifted in the direction of the image edge.

4. Method according to Claim 2 or 3, **characterized in that**, if the input radiation image (9) is quadrilateral, the input radiation image (9) is split into four image elements (TB1, TB2, TB3, TB4) and an image of the image elements (TB1, TB2, TB3, TB4) is produced such that radiation intensities from the image centre of the input radiation image (9) are projected in the direction of a corner of the radiation image (9) on the detector (6).

5. Method according to one of Claims 1 to 4, **characterized in that** a data communication signal is detected as one of the electromagnetic signals (8, 9).

6. Method according to one of Claims 1 to 5, **characterized in that** radiation images (8, 9) of reference objects (7, 12), in particular of heavenly bodies, are detected.

7. Method according to Claim 6, **characterized in that** radiation images (8, 9) of the Earth (7) and of stars (12) are detected at the same time, and the radiation image (9) of the Earth (7) is split into image elements (TB1, TB2, TB3, TB4).

8. Receiver (1) having a device for simultaneous detection and evaluation of at least two electromagnetic signals by a common detector (6), with the device being designed for detection and evaluation of at least one radiation image signal (8, 9),
**characterized in that** at least one radiation image splitter (4) is provided in order to split an input radiation image (9) into at least two image elements (TB1, TB2, TB3, TB4) and in order to project the image elements onto a radiation detector (6) which is designed such that an image of the image elements (TB1, TB2, TB3, TB4) is produced on the radiation detector (6) such that radiation intensities of the image elements (TB1, TB2, TB3, TB4) from the image centre of the input radiation image (9) are projected onto the edge of the radiation image (9) on the detector (6).

9. Receiver according to Claim 8, **characterized in that** the radiation image splitter (4) is designed such that the image elements (TB1, TB2, TB3, TB4) of the input radiation image (9) are reflected.

10. Receiver according to Claim 8, **characterized in that** the radiation image splitter (4) is designed such that the image elements (TB1, TB2, TB3, TB4) of the input radiation image (9) are shifted in the direction of the image edge.

11. Receiver according to Claim 9 or 10, **characterized in that**, if the input radiation image (9) is quadrilateral, the radiation image splitter (4) is designed such that the input radiation image (9) is split into four image elements (TB1, TB2, TB3, TB4) and an image of the inmage elements (TB1, TB2, TB3, TB4) is produced such that radiation intensities from the image centre of the input radiation image (9) are projected in the direction of a corner of the radiation image (9) on the detector (6).

12. Receiver according to one of Claims 8 to 11, **characterized in that** the receiver (1) is part of a data communication device.

13. Receiver according to one of Claims 8 to 12, **characterized in that** the receiver (1) is in the form of a sensor for detection of radiation images (8, 9) of reference objects (7, 12), in particular of heavenly bodies.

14. Receiver according to one of Claims 8 to 13, **characterized in that** the receiver (1) is in the form of an optical receiver.

15. Receiver according to Claim 14, **characterized in that** the receiver (1) is in the form of a combined Earth-star sensor.

## Revendications

1. Procédé d'acquisition et d'interprétation simultanées d'au moins deux signaux électromagnétiques (8, 9) par un détecteur (6) commun, l'acquisition et l'interprétation d'au moins un signal d'image de rayonnement (8, 9) ayant lieu, **caractérisé par** les étapes suivantes :
- division d'une image de rayonnement d'entrée (9) en au moins deux images partielles (TB1, TB2, TB3, TB4),
- projection des images partielles (TB1, TB2, TB3, TB4) sur un détecteur de rayonnement (6),
- une représentation des images partielles (TB1, TB2, TB3, TB4) sur le détecteur de rayonnement (6) étant effectuée de telle sorte que les intensités du rayonnement des images partielles (TB1, TB2, TB3, TB4) du centre de l'image de rayonnement d'entrée (9) au bord de l'image du rayonnement (9) sont projetées sur le détecteur (6).

2. Procédé selon la revendication 1, **caractérisé en ce que** les images partielles (TB1, TB2, TB3, TB4) de l'image de rayonnement d'entrée (9) sont réfléchies.

3. Procédé selon la revendication 1, **caractérisé en ce que** les images partielles (TB1, TB2, TB3, TB4) de l'image de rayonnement d'entrée (9) sont décalées en direction du bord de l'image.

4. Procédé selon la revendication 2 ou 3, **caractérisé en ce que** dans le cas d'une image de rayonnement d'entrée (9) rectangulaire, une division de l'image de rayonnement d'entrée (9) en quatre images partielles (TB1, TB2, TB3, TB4) a lieu et une représentation des images partielles (TB1, TB2, TB3, TB4) est effectuée de telle sorte que les intensités de rayonnement du centre de l'image de rayonnement d'entrée (9) sont projetées en direction d'un coin de l'image de rayonnement (9) sur le détecteur (6).

5. Procédé selon l'une des revendications 1 à 4, **caractérisé en ce qu'**un signal de communication de données est acquis en tant que l'un des signaux électromagnétiques (8, 9).

6. Procédé selon l'une des revendications 1 à 5, **caractérisé en ce que** les images de rayonnement (8, 9) d'objets de référence (7, 12), notamment de corps célestes, sont acquises.

7. Procédé selon la revendication 6, **caractérisé en ce que** les images de rayonnement (8, 9) de la Terre (7) et des étoiles (12) sont acquises simultanément et l'image de rayonnement (9) de la Terre (7) est divisée en images partielles (TB1, TB2, TB3, TB4).

8. Récepteur (1) muni d'un dispositif d'acquisition et d'interprétation simultanées d'au moins deux signaux électromagnétiques par un détecteur (6) commun, le dispositif étant conçu pour acquérir et interpréter au moins un signal d'image de rayonnement (8, 9), **caractérisé en ce :**
**qu'**il est prévu au moins un diviseur d'image de rayonnement (4) pour diviser une image de rayonnement d'entrée (9) en au moins deux images partielles (TB1, TB2, TB3, TB4) et pour projeter les images partielles sur un détecteur de rayonnement (6), lequel est conçu de telle sorte qu'une représentation des images partielles (TB1, TB2, TB3, TB4) sur le détecteur de rayonnement (6) est effectuée de telle sorte que les intensités du rayonnement des images partielles (TB1, TB2, TB3, TB4) du centre de l'image de rayonnement d'entrée (9) au bord de l'image du rayonnement (9) sont projetées sur le détecteur (6).

9. Récepteur selon la revendication 8, **caractérisé en ce que** le diviseur d'image de rayonnement (4) est conçu de telle sorte que les images partielles (TB1, TB2, TB3, TB4) de l'image de rayonnement d'entrée (9) sont réfléchies.

10. Récepteur selon la revendication 8, **caractérisé en ce que** le diviseur d'image de rayonnement (4) est conçu de telle sorte que les images partielles (TB1, TB2, TB3, TB4) de l'image de rayonnement d'entrée (9) sont décalées en direction du bord de l'image.

11. Récepteur selon la revendication 9 ou 10, **caractérisé en ce que** le diviseur d'image de rayonnement (4), dans le cas d'une image de rayonnement d'entrée (9) rectangulaire est conçu de telle sorte qu'une division de l'image de rayonnement d'entrée (9) en quatre images partielles (TB1, TB2, TB3, TB4) est effectuée et une représentation des images partielles (TB1, TB2, TB3, TB4) est effectuée de telle sorte que les intensités de rayonnement du centre de l'image de rayonnement d'entrée (9) sont projetées en direction d'un coin de l'image de rayonnement (9) sur le détecteur (6).

12. Récepteur selon l'une des revendications 8 à 11, **caractérisé en ce que** le récepteur (1) est configurée sous la forme d'une partie d'un dispositif de communication de données.

13. Récepteur selon l'une des revendications 8 à 12, **caractérisé en ce que** le récepteur (1) est conçu sous la forme d'un capteur pour acquérir des images de rayonnement (8, 9) d'objets de référence (7, 12), notamment de corps célestes.

14. Récepteur selon l'une des revendications 8 à 13, **caractérisé en ce que** le récepteur (1) est réalisé sous la forme d'un récepteur optique.

15. Récepteur selon la revendication 14, **caractérisé en ce que** le récepteur (1) est réalisé sous la forme d'un capteur combiné Terre-étoiles.
